# EUROPÄISCHE PATENTANMELDUNG

(11) **EP 0 683 067 A1**
(43) Veröffentlichungstag der Anmeldung: **22.11.1995**
(21) Anmeldenummer: 94107556.6
(22) Anmeldetag: 16.05.1994
(51) Int. Cl.: B60Q 1/30

(54) **Bremsleuchte für Kraftfahrzeuge**

(71) Anmelder: HOWARD-LLOYDE ENTERPRISE CO., LTD., Taichung 40315 (TW)
(72) Erfinder: Yang, Chang-An, Taipei (TW)
(74) Vertreter: Richter, Werdermann & Gerbaulet

(57) **Zusammenfassung**

Die Bremsleuchte (2) für Kraftfahrzeuge, die fahrzeuginnenseitig hinter der Heckscheibe des Kraftfahrzeuges angeordnet ist, stabförmig und dreiteilig mit zwei um ein Mittelteil (21) klappbaren Seitenteilen (22) ausgebildet, in einem Grundrahmen (1) gehalten und durch Zusammenklappen der beiden Seitenteile (22) um das Mittelteil (21) in eine Warndreiecksleuchte (200) umwandelbar.

## Beschreibung

Die Erfindung betrifft eine Bremsleuchte für Kraftfahrzeuge, die fahrzeuginnenseitig hinter der Heckscheibe des Kraftfahrzeuges angeordnet ist.

Das Anbringen von zusätzlichen Bremsleuchten als sogenannte dritte Bremsleuchte im Innenraum eines Kraftfahrzeuges hinter der Heckscheibe oder am Heckspoiler eines Kraftfahrzeuges ist bekannt. Neben einer einzigen zusätzlichen Bremsleuchte werden auch zwei Bremsleuchten eingesetzt, die mittels einer Halterung im Heckfensterbereich angeordnet werden. Diese zusätzlichen Bremsleuchten sind konstruktiv so ausgelegt, daß sie ausschließlich die Funktion einer optischen Anzeige erfüllen, daß ein Bremsvorgang eingeleitet worden ist. Bei der Heckspoilerausführung ist die Bremsleuchte in den Heckspoiler integriert.

Es ist Aufgabe der Erfindung, eine im Heckscheibenbereich und innenraumseitig eines Kraftfahrzeuges anzubringende Bremsleuchte zu schaffen, die in ein Warndreieck umwandelbar ist, das gut sichtbar ist und mit einer hohen Warnwirkung im Heckfensterbereich angeordnet wird.

Diese Aufgabe wird durch die im Patentanspruch 1 gekennzeichneten Merkmale gelöst.

Hiernach besteht die Erfindung in einem im Fahrzeuginnenraum hinter der Heckscheibe anzubringenden Grundrahmen mit einer lösbaren Halterung für eine stabförmige Bremsleuchte, die aus drei zweckmäßigerweise gleiche Längen aufweisenden Bremsleuchtenabschnitten besteht, wobei die beiden äußeren Bremsleuchtenabschnitte vermittels Scharniere an dem mittleren Bremsleuchtenabschnitt derart angelenkt sind, daß die beiden äußeren Bremsleuchtenabschnitte zu einem Warndreieck gegeneinander verschwenkt werden, daß sie mit ihren freien Enden zur Ausbildung der oberen Dreieckspitze aneinanderstoßen und in dieser Stellung, beispielsweise mittels einer Magnet- oder Klettverbindung, lösbar miteinander verbunden sind. Durch die Anordnung des aus der Bremsleuchte gebildeten Warndreiecks im Heckfensterbereich ist durch die höhere Anordnung das Warndreieck gut sichtbar und von weitem bereits erkennbar untergebracht, wobei für eine optische Signalwirkung das Licht der eingeschalteten Bremsleuchte oder ein zusätzlich vorgesehenes LED-Blinklicht herangezogen werden kann. Bei der Benutzung er Signaleinrichtung zur Anzeige eines Bremsvorganges wird das Licht der Bremsleuchte über ihre gesamte Länge durch die Heckscheibe abgestrahlt, was auch der Fall ist, wenn eine Faltung der Bremsleuchte zum Warndreieck erfolgt ist, da alle drei Seiten des Warndreiecks Licht ausstrahlen. Die Umrüstung von der Bremsleuchte in ein Warndreieck oder umgekehrt ist sehr einfach. Hierzu wird die Bremsleuchte aus der Halterung des Grundrahmens herausgenommen, zum Warndreieck gefaltet und wiederum in die Halterung geklemmt, wobei auch eine Entnahme der Bremsleuchte aus der Halterung des Grundrahmens entfallen kann, wenn im Zustand der Halterung des mittleren Bremsleuchtenabschnittes die beiden seitlichen Bremsleuchtenabschnitte zum Warndreieck hochgeklappt und ihre Enden miteinander verbunden werden.

Die erfindungsgemäße dreiteilige, bei Bedarf in eine Warndreiecksleuchte verwandelbare Bremsleuchte kann wirksam zur Warnung der übrigen Kraftfahrzeuge hinter dem defekten Fahrzeug eingesetzt werden, um das Auffahren zu verhindern und somit die Sicherheit der Kraftfahrer zu erhöhen.

Ein Hauptziel in der Verwendung der Erfindung besteht darin, für Kraftfahrzeuge einen Grundrahmen zur Befestigung der dreiteiligen dritten Bremsleuchte innen hinter der Heckscheibe zur Verfügung zu stellen, wobei der Grundrahmen dazu verwendet werden kann, den Winkel dieser dreiteiligen Bremsleuchte an unterschiedliche Anstellwinkel der Heckscheiben anzupassen, wodurch Fahrzeuge den Vorteil erhalten, eine dreiteilige Bremsleuchte als Warndreieck nutzen zu können.

Erfindungsgemäß ist daher die dreiteilig ausgebildete Bremsleuchte mit einem aus dem Grundhalter und dem Träger zur Einstellung des Montagewinkels der dreiteiligen Bremsleuchte bestehenden Grundrahmen kombiniert. Der Grundrahmen wird innen hinter der Heckscheibe des Kraftfahrzeugs in geeigneter Stellung zur Anbringung der dreiteiligen, bei Bedarf an eine Warndreiecksleuchte verwandelbaren Bremsleuchte angebracht.

Vorteilhafte Ausgestaltungen der Erfindung sind in den Unteransprüchen gekennzeichnet.

Ausführungsbeispiele der Erfindung werden nachstehend an Hand der Zeichnung näher erläutert. Es zeigen
- Fig. 1: eine schaubildliche rückwärtige Ansicht eines Kraftfahrzeuges mit im Heckscheibenbereich angeordneter dreiteilig ausgebildeter zusätzlicher Bremsleuchte,
- Fig. 2: eine schaubildliche rückwärtige Ansicht eines Kraftfahrzeuges mit im Heckscheibenbereich angeordnetem, aus der Bremsleuchte gebildeten Warndreieck,
- Fig. 3: eine schaubildliche Explosionsdarstellung der dreiteiligen Bremsleuchte mit dem diese aufnehmenden Grundrahmen,
- Fig. 4: eine schaubildliche Ansicht des Grundrahmens mit an dieser gehaltenen Bremsleuchte,
- Fig. 5: eine schaubildliche Ansicht des Grundrahmens mit in diesem angeordneter, aus der Bremsleuchte erstelltem Warndreieck,
- Fig. 6: teils in Ansicht, teils in einem senkrechten Schnitt die Anordnung des Grundrahmens mit der Bremsleuchte bzw. dem Warndreieck hinter der Heckscheibe eines Kraftfahrzeuges und
- Fig. 7: teils in Ansicht, teils in einem senkrechten Schnitt die Anordnung des Grundrahmens mit der Bremsleuchte bzw. Warndreieck hinter der Heckscheibe eines Kraftfahrzeuges an dessen Heckklappe.

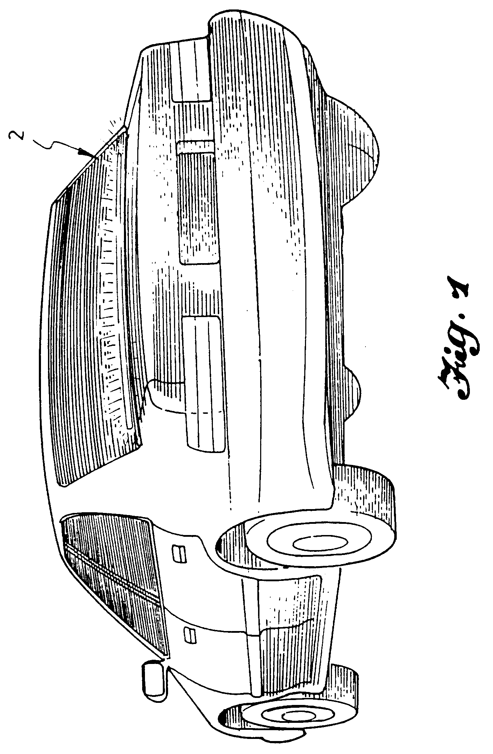

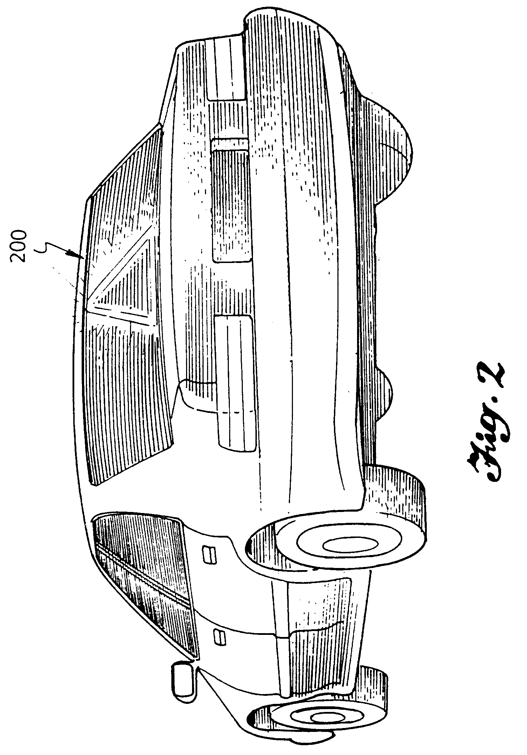

Fig. 1 und 2 zeigen ein Kraftfahrzeug mit der erfindungsgemäß aus einer dreiteiligen Bremsleuchte 2, die in eine Warndreiecksleuchte 200 umwandelbar ist, bestehenden optischen Signaleinrichtung, die innen hinter der Heckscheibe eines Kraftfahrzeugs angebracht ist. In Fig. 1 ist die längliche, stabförmige und dreiteilige dritte Bremsleuchte 2 gezeigt, die beim normalen Fahrbetrieb des Kraftfahrzeugs verwendet wird. Bei einem Defekt am Kraftfahrzeug oder falls dieses aus anderen Gründen unterwegs angehalten werden muß, kann zur Warnung der anderen Kraftfahrzeuge dahinter und zur Erhöhung der Sicherheit des stehenden Kraftfahrzeugs die dreiteilige Bremsleuchte 2 zu einer Warndreiecksleuchte 200 gefaltet werden, die blinken und damit die Aufmerksamkeit erregen kann.

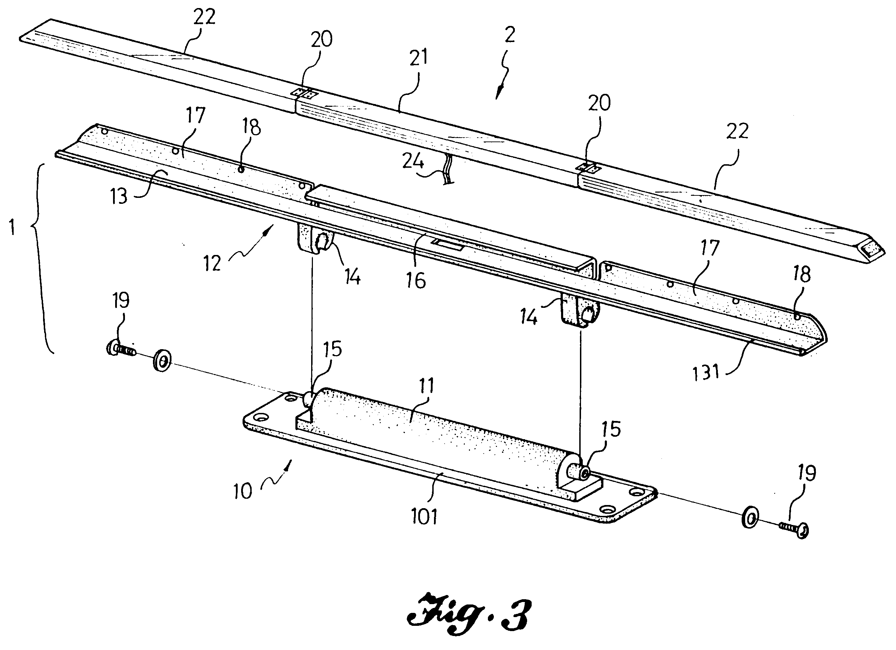

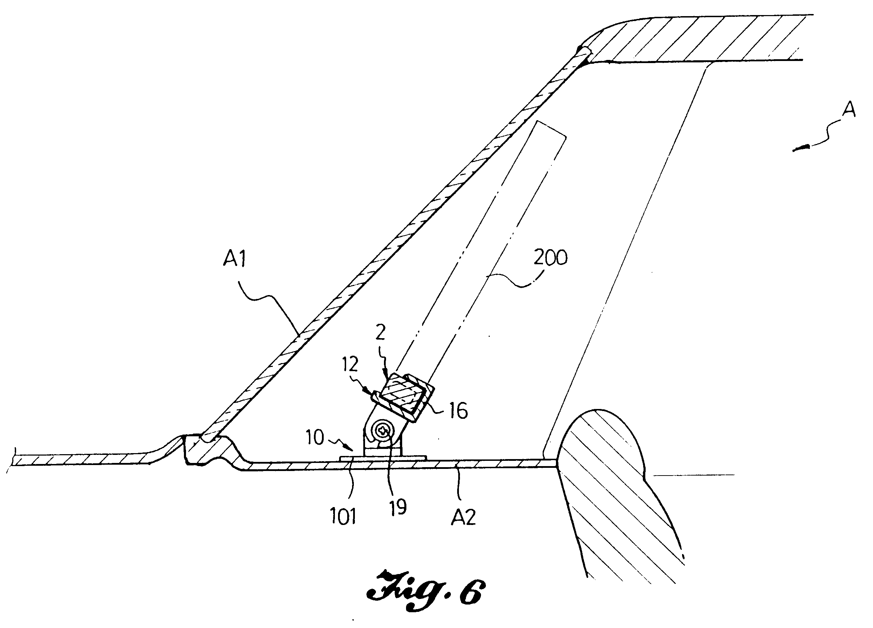

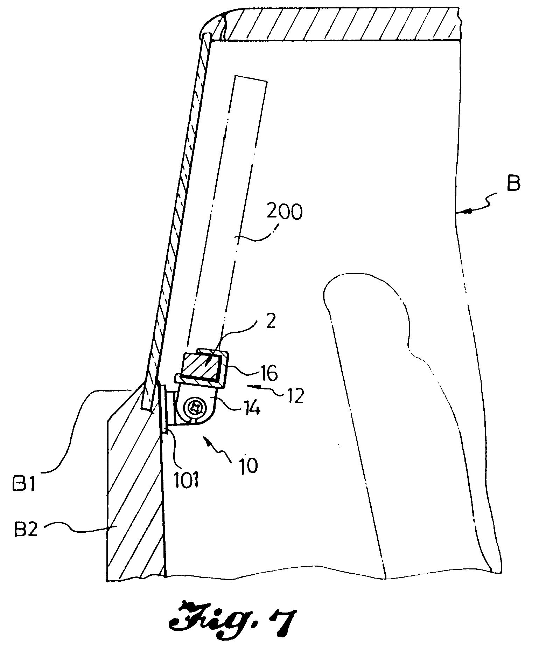

Die Montage der dreiteiligen Bremdleuchte 2 innen hinter der Heckscheibe eines Kraftfahrzeugs erfolgt mittels eines Grundrahmens 1 (Fig. 3). Der Grundrahmen 1 besteht aus einem Grundhalter 10, einem Träger 12 und einer Stellschraube 19 und kann mit der dreiteiligen Bremsleuchte 2 kombiniert werden. Der Grundhalter 10 und der Träger 12 sind durch Klauen 14 und darin einrastende Zapfen 15 eines Zapfenhalters 11 an dem Grundrahmen 1 gehalten. Eine Halteplatte 101 am Boden des Grundhalters 10 wird zur Montage auf der Befestigungsfläche z. B. der rückwärtigen Hutablage vor der Heckscheibe im Kraftfahrzeuginneren angebracht (Fig. 6). Eine Befestigung ist auch im Heckscheibenbereich an der Heckklappe eines Kraftfahrzeuges möglich (Fig. 7).

Die Bremsleuchte 2 besteht aus drei Teilen, einem mittleren Teil 21 und zwei Seitenteilen 22, die über Scharniere 20 mit dem Mittelteil 21 verbunden sind.

Der Träger 12 ist als länglicher, stabförmiger Halter mit einem C-und/oder L-förmigen Querschnitt ausgebildet. Die Außenkante der Grundplatte 13 des Trägers 12 weist eine nach oben gerichtete Schutzkante 131 auf. Das Mittelteil des Trägers 12 ist als Klemmstück 16, mit einem C-förmigen Querschnitt ausgebildet, während die beiden äußeren Enden des Trägers Rastungen 17 bilden, deren Querschnitt L-förmig ist. Die Kante der inneren Seitenwand der Rastungen 17 ist mit mehreren Vorsprüngen 18 versehen. Die Klauen 14 rasten in die Zapfen 15 des Zapfenhalters 11 ein und sind in bezug auf die Zapfen drehbar. Weiterhin wird eine Schraube 19 zur Fixierung der Verbindung zwischen den Klauen 14 und den Zapfen 15 verwendet. Die Rastungen 17 werden von hochkant gestellten Abwinkelungen der Grundplatte 13 gebildet und sind nur in den beiden äußeren Seitenbereichen der Grundplatte 13 des Grundrahmens 1 ausgebildet, wobei die beiden äußeren seitenbereiche eine Länge aufweisen, die den beiden Seitenteilen 22 der Bremsleuchte entsprechen, d. h. jeder Seitenbereich entspricht der Länge eines Bremsleuchtenseitenteils 22. Der mittlere Bereich der Grundplatte 13 entspricht der Länge des Mittelteils 21 der Bremsleuchte 2.

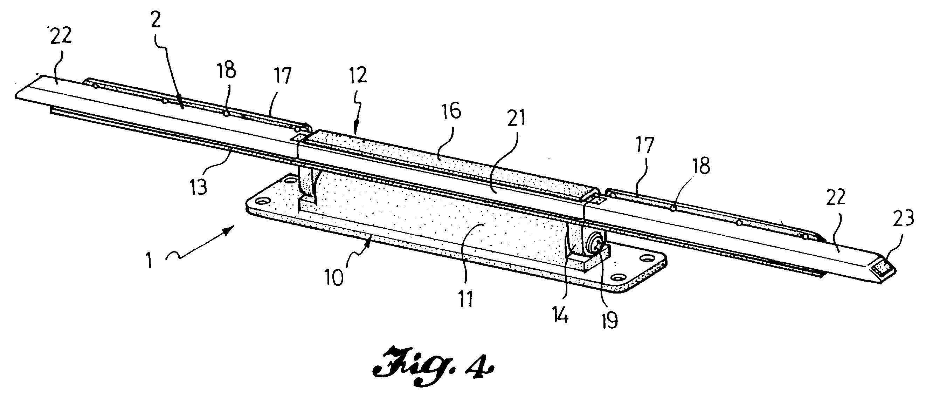

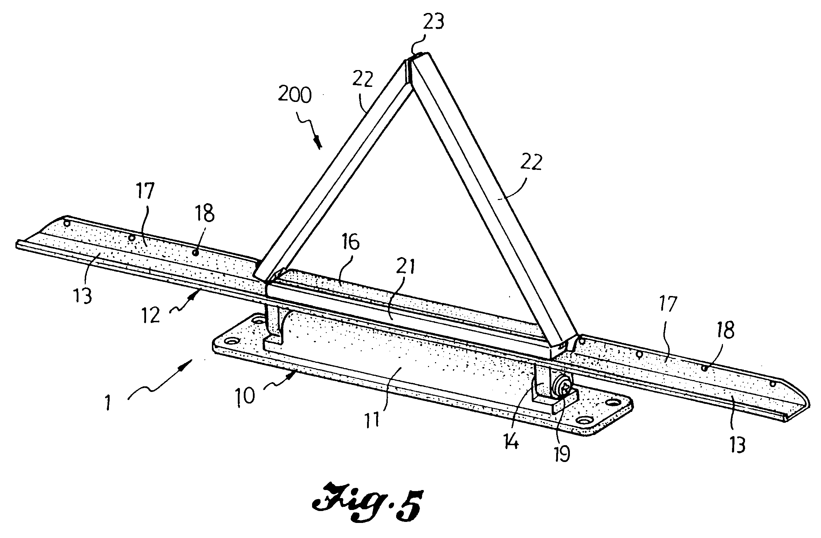

Der mittlere Teil 12 der dreiteiligen Bremsleuchte 2 ist durch das Klemmteil 16 angeklemmt, wobei die beiden Seitenteile 22 der dreiteiligen Bremsleuchte 2 zeitweilig durch die Rastungen 17 mit Hilfe der Vorsprünge 18 und durch die Elastizität der Rastungen 17 selbst gehalten werden. Wie aus Fig. 4 ersichtlich, wird die dreiteilige Bremsleuchte 2 an dem Träger 12 so befestigt, daß ein drittes Bremslicht aus LED gebildet wird. Wird die Warndreiecksleuchte 200 benötigt, werden die beiden Seitenteile 22 der Bremsleuchte 2 nach oben geklappt, so daß die an den freien Enden der Seitenteile 22 der Bremsleuchte 2 vorgesehenen Verbindungsmittel, wie Magnetkörper 23 oder die Teile einer Klettverbindung zusammengeführt werden können, um ein gleichschenkliges Warndreieck zu bilden, das zur Erregung der Aufmerksamkeit blinken kann (Fig. 5). Die beiden Seitenteile 22 der Bremsleuchte 2 können nach ÜBerwinden der federnden Rastung der Vorsprünge 18 und Lösen der Rastungen 17 mit Hilfe von Gelenken 20 eingeklappt werden, und zur Wiederherstellung der dreiteiligen Bremsleuchte 2 können die beiden Seitenteile 22 in die Rastungen 17 gedrückt und so daran befestigt werden. Die Befestigung erfolgt somit vermittels einer federnd-elastischen Klemmverbindung.

Wie in Fig. 6 dargestellt, wird die Signaleinrichtung auf einer Platte A2 des Rücksitzes innen hinter der Heckscheibe montiert. Der Träger kann drehbar mit dem Grundhalter 10 verbunden und im entsprechenden Winkel passend für verschiedene Kraftfahrzeuge mit unterschiedlicher Heckscheibenneigung eingestellt werden.

Wie in Fig. 7 dargestellt, ist der Grundrahmen 1 an der Innenseite einer Türplatte B2 innen hinter der Heckscheibe eines Kombi-Fahrzeugs B angebracht. Der Träger 12 ist auf dem Grundhalter 10 in einem Winkel von ca. 90° montiert, so daß die dreiteilige Bremsleuchte 2 von außerhalb der Heckscheibe gesehen werden kann.

Die beiden Seitenteile 22 der Bremsleuchte 2 sind über die Vorsprünge 18 in den Träger 12 federnd eingerastet. Wahlweise kann die Bodenfläche der beiden Seitenteile 22 und die entsprechende Oberfläche der Grundplatte 13 mit Klettbandstreifen (nicht dargestellt) versehen werden, so daß die beiden Seitenteile 22 mit der Grundplatte 13 in auseinandergefaltetem Zustand verbunden werden können, und zur Verwandlung der dreiteiligen Bremsleuchte 2 in eine Warndreiecksleuchte 200 ist dann lediglich das eine Seitenteil und das andere Seitenteil der Bremsleuchte nach oben zu klappen, wobei sie sich von den Klettbandstreifen auf der Grundplatte 13 lösen.

Der Grundhalter 10 kann von einer weiteren Ausführungsform, in zwei kleine Grundhalter mit jeweils einer Befestigungsplatte 101 und einem Schwenkhalter 11 sowie einer schwenkbar mit den Klauen 14 verbundenen Zapfenachse 15 unterteilt und an entsprechender Stelle montiert werden.

Zusammenfassend stellt die Erfindung einen innen hinter der Heckscheibe montierten Grundrahmen für eine dreiteilige dritte Bremsleuchte dar, die sich in eine Warndreiecksleuchte verwandeln läßt. Der Grundrahmen ist neuartig und praktisch und erweitert das Anwendungsfeld der dreiteiligen dritten Bremsleuchte.

Die Bremsleuchte 2 ist mit einer Anzahl von Lichtquellen versehen, deren Stromversorgung kraftfahrzeugseitig erfolgt, wobei die Betätigung der Bremsleuchte über das Bremspedal erfolgt. Zusätzlich kann die Bremsleuchte 2 noch mit einem LED-Blinklicht versehen sein, wobei auch in diesem Fall die Stromversorgung über die Lichtmaschine oder Batterie des Kraftfahrzeuges erfolgt. Die Bremsleuchte kann zusätzlich für den Gebrauch als Warndreieckleuchte mit einer eigenen Stromversorgung, z. B. in Form von Batterien erfolgen. Bei einer Umrüstung der Bremsleuchte in eine Warndreiecksleuchte wird die über das Bremspedal steuerbare Stromversorgung unterbrochen und diese über die Lichtmaschine oder Batterie selbst vorgenommen, wofür ein Umschalter in der stromzuführenden Leitung vorgesehen ist.

## Patentansprüche

1. Bremsleuchte für Kraftfahrzeuge, die fahrzeuginnenseitig hinter der Heckscheibe des Kraftfahrzeuges angeordnet ist, dadurch gekennzeichnet, daß die Bremsleuchte (2) stabförmig und dreiteilig mit zwei um ein Mittelteil (21) klappbaren Seitenteilen (22) dreiteilig ausgebildet ist, in einem Grundrahmen (1) gehalten und durch Zusammenklappen der beiden Seitenteile (22) um das Mittelteil (21) in eine Warndreiecksleuchte (200) umwandelbar ist.

2. Bremsleuchte nach Anspruch 1, dadurch gekennzeichnet, daß der Grundrahmen (1) aus
- einem Grundhalter (10) mit einer Befestigungsplatte (101), so daß der Grundhalter (10) an der waagerechten oder senkrechten Fläche eines Kraftfahrzeugs befestigt werden kann, wobei die Befestigungsplatte (101) mit einem Zapfenhalter (11) mit zwei jeweils in der Mitte der beiden Zapfenhalterenden hervorstehenden Achszapfen (15) versehen ist, und
- einem stabförmigen Träger (12) in einer länglichen Form zur Halterung der dreiteiligen Bremsleuchte (2), wobei die Bodenplatte des Trägers (12) mit zwei Klauen (14) versehen ist, die die Achszapfen (15) umgreifen und drehbar mit den Achszapfen (15) des Zapfenhalters (11) verbunden sind, wobei der Träger (12) drei Teile umfaßt, von denen das mittlere Teil als Klemmstück zur Befestigung des Mittelteils (21) der dreiteiligen Bremsleuchte (2) ausgebildet ist und die beiden anderen, zu beiden Seiten des Mittelteils (21) angeordneten Teile (22) federnd in die beiden äußeren Teile der dreiteiligen Bremsleuchte (2) einrasten, besteht.

3. Bremsleuchte nach einem der Ansprüche 1 und 2, dadurch gekennzeichnet, daß der Querschnitt des Klemmstücks (16) des Trägers (12) C-förmig ausgebildet ist, wobei die beiden Seitenteile des Trägers (12) L-förmig ausgebildet sind und am Rand der Innenseite zum federnden Einrasten in die beiden äußeren Teile der dreiteiligen Bremsleuchte (2) mehrere Vorsprünge (18) aufweisen.

4. Bremsleuchte nach einem der Ansprüche 1 bis 3, dadurch gekennzeichnet, daß der Montagewinkel des Trägers (12) mittels einer Schwenkverbindung zwischen dem Träger (12) und dem Grundhalter (10) eingestellt und mit Schrauben nach Justierung des Winkels des Trägers (12) gesichtert sind.

5. Bremsleuchte nach einem der Ansprüche 1 bis 4, dadurch gekennzeichnet, daß der Grundrahmen (1) in zwei kleinere Grundrahmen unterteilt ist, die jeweils mit einer Befestigungsplatte (101) und einer Zapfenhalterung (11) sowie einer Zapfenachse (15) versehen sind, die schwenkbar mit der Klaue (14) des Trägers (12) verbunden und montierbar ist.
Bremsleuchte nach einem der Ansprüche 1 bis 4, dadurch gekennzeichnet, daß die beiden äußeren Teile der dreiteiligen Bremsleuchte (2) mit Klettbandstreifen befestigt sind und an den beiden Seitenteilen des Trägers (12) befestigt und wieder lösbar sind.

6. Bremsleuchte nach einem der Ansprüche 1 bis 5, dadurch gekennzeichnet, daß an das mittlere Teil (21) der Bremsleuchte die beiden äußeren Seitenteile (22) mittels Scharnieren (20) befestigt sind.

7. Bremsleuchte nach einem der Ansprüche 1 bis 6, dadurch gekennzeichnet, daß der mittlere, die Klauen (14) tragende Teil des Trägers (12) aus einem Hohlprofil besteht, in das die beiden Seitenteile des Trägers (12) einschiebbar bzw. ausziehbar sind.
